# EUROPÄISCHE PATENTSCHRIFT

(11) **EP 2 653 883 B1**
(45) Veröffentlichungstag und Bekanntmachung des Hinweises auf die Patenterteilung: **19.11.2014**
(21) Anmeldenummer: 12002782.6
(22) Anmeldetag: 20.04.2012
(51) Int. Cl.: G01S 7/48, G01S 17/00, G01C 15/00

(54) **Optischer Sensor**
Optical sensor
Capteur optique

(43) Veröffentlichungstag der Anmeldung: 23.10.2013
(73) Patentinhaber: Pepperl + Fuchs GmbH, 68307 Mannheim (DE)
(72) Erfinder: WÜNSCHE, Tilo, 14482 Potsdam (DE); KLAR, Ulrich, 12159 Berlin (DE)
(74) Vertreter: Schiffer, Axel Martin

(56) Entgegenhaltungen:
- EP-B1- 2 237 065
- DE-A1-102005 055 572
- GB-A- 2 444 138
- US-B1- 6 204 916

## Beschreibung

Die vorliegende Erfindung bezieht sich auf einen optischen Sensor nach dem Oberbegriff des Anspruchs 1.

Ein gattungsgemäßer optischer Sensor weist eine Lichtquelle zum Aussenden von Sendelicht in einen Überwachungsbereich, eine Dreheinrichtung zum Drehen einer Strahlrichtung des Sendelichts um eine quer zur Strahlrichtung orientierte Rotationsachse, einen Detektor zum Messen von nachzuweisendem Licht, das von einem Objekt im Überwachungsbereich zurückgestrahlt wird, und ein Gehäuse zum Trennen eines Sensorinnenraums von dem Überwachungsbereich auf, wobei das Gehäuse eine Gehäusewand hat, die für das Sendelicht und das nachzuweisende Licht durchlässig ist und durch welche das Licht, also das nachzuweisende Licht und das Sendelicht, im Messbetrieb hindurchtritt. Das Sendelicht kann auch als Sendelichtstrahl oder Sendelichtpuls bezeichnet werden.

Ein solcher Sensor ist beispielsweise aus EP 2 237 065 B1 bekannt. Mögliche Einsatzzwecke können die Feststellung der Anwesenheit oder des Abstands eines Objekts im Überwachungsbereich sein. Um verschiedene Abschnitte des Überwachungsbereichs unterscheiden zu können, wird die Strahlrichtung des Sendelichts im Messbetrieb gedreht und dadurch sequenziell in verschiedene Abschnitte des Überwachungsbereichs geleitet.

Bei bekannten optischen Sensoren ist nachteilig, dass ein Strahlquerschnitt des Sendelichts verhältnismäßig groß ist. Dadurch können kleine Objekte im Überwachungsbereich nicht sicher erkannt werden.

Ein optischer Scanner ist aus GB 2 444 138 A bekannt. Bei diesem wird ein Lichtstrahl mit einem bewegbaren Scanspiegel durch ein gewölbtes Gehäuse in einen Überwachungsraum geleitet. Um Abbildungsfehler durch die Wölbung des Gehäuses auszugleichen, kann eine Korrekturlinse eingesetzt werden. Alternativ kann der Scanspiegel eine geeignete Form aufweisen, durch die die Abbildungsfehler kompensiert werden.

Weitere optische Scanner, bei denen ein Lichtstrahl mit einem bewegbaren Spiegel in einen Überwachungsraum geführt wird, sind in US 6,204,916 B1 und EP 2 237 065 B1 beschrieben.

Als eine **Aufgabe** der Erfindung kann angesehen werden, einen optischen Sensor bereitzustellen, welcher einen zuverlässigen Nachweis auch von sehr kleinen Objekten im Überwachungsbereich ermöglicht.

Diese Aufgabe wird durch den optischen Sensor mit den Merkmalen des Anspruchs 1 gelöst.

Bevorzugte Ausgestaltungen des erfindungsgemäßen Sensors sind Gegenstand der abhängigen Ansprüche und werden außerdem in der folgenden Beschreibung, insbesondere im Zusammenhang mit den Figuren, beschrieben.

Der optische Sensor der oben genannten Art weist erfindungsgemäß optische Korrekturmittel in einem Strahlengang des Sendelichts auf, wobei die optischen Korrekturmittel zum Kompensieren oder Vermeiden eines durch eine Wölbung der Gehäusewand bedingten Astigmatismus gestaltet sind.

Der Erfindung liegt die Erkenntnis zugrunde, dass durch eine Wölbung der Gehäusewand eine Veränderung der Fokuslage des Sendelichts und damit eine Aufweitung des Strahlquerschnitts des Sendelichts entstehen kann. Die Wölbung liegt zumindest teilweise in Bereichen der Gehäusewand vor, durch welche das Sendelicht auf dem Weg von der Lichtquelle zum Überwachungsbereich durchtritt. Weil zur sequenziellen Überwachung des Überwachungsbereichs die Strahlrichtung des Sendelichts um die Rotationsachse gedreht wird, ist es zweckmäßig, wenn auch die Gehäusewand um dieselbe Rotationsachse eine Wölbung aufweist.

Die Gehäusewand hat daher zumindest stellenweise um die Rotationsachse eine gewölbte oder gekrümmte Form. Dadurch wirkt sie in dieser Richtung für Sendelicht als Zerstreuungslinse, das heißt die Fokuslage für solche Anteile des Sendelichts wird verändert.

Bei bekannten Sensoren hat die Gehäusewand in einem axialen Schnitt, der die Rotationsachse enthält, einen geraden Verlauf oder eine Krümmung, deren Krümmungsradius von dem Krümmungsradius der Wölbung der Gehäusewand um die Rotationsachse herum abweicht. Für Axialanteile des Sendelichts, also solche Anteile, die in einer Axialebene, die die Rotationsachse enthält, hat die Gehäusewand bei bekannten Sensoren eine andere Brennweite als für Transversalanteile des Sendelichts, die in einer Transversalebene auf den Bereich der Gehäusewand treffen.

Unter einer Transversalebene soll eine Ebene senkrecht zur Axialebene verstanden werden. Sie ist also quer zur Rotationsachse orientiert. Unter einer Axialebene kann eine Ebene verstanden werden, die die Rotationsachse und die Strahlrichtung des Sendelichts enthält, wobei abhängig von der Drehung der Strahlrichtung verschiedener Axialebenen definiert werden.

Ein Strahlquerschnitt des Sendelichts hat eine Ausdehnung in der Axialebene sowie in der Transversalebene. Die Anteile eines Sendelichtstrahls in diesen Ebenen können auch als Axialanteil und Transversalanteil bezeichnet werden. Bei bekannten Sensoren haben der Axial- und der Transversalanteil des Sendelichts durch die Wölbung der Gehäusewand verschiedene Fokuslagen. Die Gehäusewand hat also unterschiedliche Brennweiten für den Axial- und den Transversalanteil. Dies wird auch als Astigmatismus bezeichnet.

Als ein Kerngedanke der Erfindung kann angesehen werden, optische Korrekturmittel vorzusehen, durch die für Sendelicht innerhalb des Überwachungsbereichs kein oder nur ein geringer Astigmatismus auftritt. Hierzu beeinflussen die optischen Korrekturmittel die Fokuslagen des Axial- und des Transversalanteil des Sendelichts unterschiedlich stark. Das heißt, durch die optischen Korrekturmittel wird für den Axial- und den Transversalanteil des Sendelichts eine Strahlform, insbesondere eine Konvergenz oder Divergenz, unterschiedlich verändert. Dieser Unterschied ist gerade so gewählt, dass eine durch die Wölbung verursachte Differenz in der Strahlform, insbesondere der Konvergenz oder Divergenz, des Axial- und des Transversalanteils des Sendelichts ausgeglichen wird.

Die optischen Korrekturmittel können als solch eine Krümmung der Gehäusewand gebildet sein, dass trotz einer Wölbung der Gehäusewand um die Rotationsachse kein Astigmatismus auftritt. Alternativ oder zusätzlich können die optischen Korrekturmittel weitere Komponenten innerhalb oder außerhalb des Gehäuses aufweisen, welche selbst einen Astigmatismus bewirken und dadurch den durch die Wölbung der Gehäusewand bewirkten Astigmatismus teilweise oder vollständig kompensieren.

Bei einer bevorzugten Ausgestaltung des erfindungsgemäßen Sensors ist die Gehäusewand zumindest in Durchtrittsbereichen, in denen das Sendelicht hindurchtritt, rotationssymmetrisch bezüglich der Rotationsachse geformt und die optischen Korrekturmittel sind ebenfalls in Bereichen, in denen das Sendelicht durch sie durchtritt, rotationssymmetrisch bezüglich der Rotationsachse geformt. Die Gehäusewand hat also in einer Transversalebene eine Krümmung über mindestens einen Kreisabschnitt. Bevorzugt ist sie in Bereichen, in denen das Sendelicht hindurchtritt, kreisförmig oder elliptisch. Indem auch die optischen Korrekturmittel in den Bereichen, in denen auf sie das Sendelicht tritt, rotationssymmetrisch sind, wird vorteilhafterweise für alle Durchtrittsbereiche der Gehäusewand ein Astigmatismus vermieden oder ausgeglichen.

Erfindungsgemäß ist vorgesehen, dass die optischen Korrekturmittel durch einen gekrümmten Bereich der Gehäusewand und ringförmig in einer Transversalebene entlang der Gehäusewand gebildet sind und dass der gekrümmte Bereich eine reduzierte Wandstärke aufweist.

Eine Krümmung liegt dabei in einer Richtung entlang der Rotationsachse, also in einem axialen Schnitt durch die Gehäusewand, vor. Die reduzierte Wandstärke in dem gekrümmten Bereich kann als reduziert gegenüber der Wandstärke der übrigen Gehäusewand verstanden werden.

Damit durch die reduzierte Wandstärke ein Astigmatismus der Gehäusewand effizient verringert oder vermieden wird, befindet sich die geringste Wandstärke bevorzugt entlang der Rotationsachse in einem zentralen Bereich eines Querschnitts des Sendelichtstrahls. Hingegen nimmt die Wandstärke entlang der Rotationsachse zum Rand der Querschnittsfläche des Sendelichts hin zu. Durch diese Form kann der gekrümmte Bereich der Gehäusewand auch als Zylinderlinse, die auf eine Ringform gebogen ist, bezeichnet werden.

Die Gehäusewand kann außerhalb des Durchtrittsbereichs oder an den Rändern des Durchtrittsbereichs eine Wandstärke von beispielsweise 1 mm oder 2 mm bei einem Innenradius des Gehäuses von 30 mm aufweisen. Die reduzierte Wandstärke kann davon ausgehend um bis zu 10 µm oder 100 µm, also um maximal 1% oder maximal 10% verringert sein.

Durch eine Wölbung der Gehäusewand um die Rotationsachse hat die Gehäusewand für Transversalanteile des Sendelichtstrahls die Wirkung einer Zerstreuungslinse. Eine astigmatische Korrektur kann erreicht werden, wenn Axialanteile ebenfalls eine licht-zerstreuende Wirkung erfahren. Hierzu kann vorgesehen sein, dass für Axialanteile des Sendelichtstrahls die optischen Korrekturmittel die Wirkung einer Zerstreuungslinse haben und dass die Wirkung einer Zerstreuungslinse durch die Wölbung der Gehäusewand und die Wirkung einer Zerstreuungslinse durch die optischen Korrekturmittel zu einem Annähern der Fokuslagen für den Transversalanteil und den Axialanteil des Sendelichts führen.

Bevorzugt sind die zerstreuende Wirkung für Transversalanteile durch die Wölbung der Gehäusewand und die zerstreuende Wirkung für Axialanteile durch die optischen Korrekturmittel gleich stark. Dadurch haben der Transversal- und der Axialanteil des Sendelichts die gleichen Fokuslagen.

Bei solch einer erfindungsgemäßen Variante haben sowohl die Wölbung der Gehäusewand als auch die optischen Korrekturmittel eine licht-zerstreuende Wirkung, die zu einer Strahlaufweitung führt. Um die Querschnittsfläche des Sendelichtstrahls gering zu halten, kann gewünscht sein, den Sendelichtstrahl als paralleles Strahlenbündel in den Überwachungsbereich zu senden. Dies kann auch als Fokus im Unendlichen bezeichnet werden. Damit auch trotz Wölbung der Gehäusewand und Wirkung der optischen Korrekturmittel das Sendelicht als paralleles Strahlenbündel in den Überwachungsbereich gesendet wird, kann vorgesehen sein, dass zwischen der Lichtquelle und der Gehäusewand Fokussiermittel vorhanden sind, durch die das Sendelicht konvergent, also als zusammenlaufendes Strahlenbündel, auf die Gehäusewand trifft. Ein paralleles Strahlenbündel wird dann erst zusammen mit der Wölbung der Gehäusewand und den optischen Korrekturmitteln erreicht.

Die optischen Korrekturmittel können auch so gestaltet sein, dass sie die Wirkung einer Sammellinse für Transversalanteile des Sendelichtstrahls haben. Hierdurch kann die zerstreuende Wirkung der Wölbung der Gehäusewand für die Transversalanteile des Sendelichtstrahls kompensiert werden.

Bei bevorzugten Varianten des erfindungsgemäßen Sensors sind die optischen Korrekturmittel durch eine Formung der Gehäusewand gebildet. Hierbei können zum Bereitstellen einer Wirkung einer Zerstreuungslinse für Axialanteile des Sendelichts die optischen Korrekturmittel als gekrümmter Bereich der Gehäusewand gebildet sein, wobei der gekrümmte Bereich in einem axialen Schnitt eine konkave Form aufweist. Dabei kann durch den gekrümmten Bereich der Gehäusewand eine konkave Form der Innen- und/oder Außenseite der Gehäusewand gebildet sein. Entscheidend ist bei dieser Form, dass eine zerstreuende Wirkung für Axialanteile des Sendelichts erreicht wird. Dies ist grundsätzlich auch mit einem Durchtrittsbereich möglich, der in einem Axialschnitt bikonkav, konvex-konkav oder meniskusförmig ist.

Bei einer weiteren Ausführung des erfindungsgemäßen Sensors ist als optisches Korrekturmittel eine Formung der Gehäusewand als Kugelschalensegment vorgesehen. Das Kugelschalensegment hat bevorzugt in einer Transversalebene den gleichen Krümmungsradius wie in einer Axialebene. Zudem fallen diese Krümmungsradien bevorzugt an der Rotationsachse in Höhe der Abstrahlung des Sendelichts zusammen. Hierdurch trifft Sendelicht stets senkrecht auf die Gehäusewand, die wegen der Formung als Kugelschalensegment keinen Astigmatismus erzeugt. Die Gehäusewand hat dann lediglich eine licht-zerstreuende Wirkung haben, die für einen Axialund einen Transversalanteil des Sendelichts gleich ist. Das Kugelsegment kann insbesondere vollständig um die Rotationsachse verlaufen und entlang der Rotationsachse auf einen Höhenbereich begrenzt sein, durch den das Sendelicht durchtritt.

Alternativ oder zusätzlich zu der Formung der Gehäusewand können die optischen Korrekturmittel auch zusätzliche, insbesondere separate, Komponenten aufweisen. So weisen die optischen Korrekturmittel bei einer weiteren Ausführungsform einen lichtdurchlässigen Ring auf, der konzentrisch zum Gehäuse, insbesondere konzentrisch zu den Durchtrittsbereichen der Gehäusewand, angeordnet ist. Der Ring hat zum Bereitstellen der Wirkung einer Zerstreuungslinse einen konkaven Oberflächenbereich, der so gewählt ist, dass der Astigmatismus der Gehäusewand teilweise oder vollständig kompensiert wird. Eine Krümmung des Rings in einem axialen Schnitt, also entlang der Rotationsachse, kann wie die zur Gehäusewand beschriebenen Formungen in derselben Richtung ausgeführt sein.

Bei einer weiteren bevorzugten Ausführungsvariante des erfindungsgemäßen Sensors weisen die optischen Korrekturmittel zum Kompensieren des Astigmatismus mindestens eine Korrekturlinse auf, die mit der Dreheinrichtung verbunden ist und gemeinsam mit der Strahlrichtung des Sendelichts drehbar ist.

Die mindestens eine Korrekturlinse kann eine astigmatische Linse umfassen. Diese hat für Axialanteile des Sendelichts, die in einem axialen Schnitt, welcher die Senderichtung enthält, auf die Korrekturlinse treffen, einen kleineren Brechwert als für Transversalanteile des Sendelichts, die in einer Transversalebene auf die Korrekturlinse treffen. Ein kleinerer Brechwert bedeutet, dass eine streuende Wirkung stärker oder eine sammelnde Wirkung schwächer ist. In beiden Fällen kann eine streuende Wirkung der Gehäusewand für Transversalanteile des Sendelichts kompensiert werden, so dass ein Astigmatismus schwächer ausfällt oder gar nicht auftritt.

Bei Größenvergleichen zum Brechwert oder zur Brennweite ist in den vorliegenden Erläuterungen stets das Vorzeichen berücksichtigt. So hat eine stark streuende Linse einen kleineren Brechwert als eine plane Fläche ohne Brechkraft.

Grundsätzlich kann die Korrekturlinse sowohl für den Axial- als auch für den Transversalanteil eines Sendelichtstrahls eine licht-sammelnde oder eine licht-streuende Wirkung haben, solange der Brechwert für den Axialanteil geringer ist als der Brechwert für den Transversalanteil.

Die mindestens eine Korrekturlinse kann eine Zylinderlinse umfassen, die entlang der Rotationsachse eine konkave Form für eine licht-zerstreuende Wirkung hat und in einer Richtung senkrecht hierzu eine gerade Kontur hat. Eine solche Zylinderlinse hat also für den Axialanteil einen negativen Brechwert und für den Transversalanteil einen Brechwert von null oder nahe null.

Alternativ oder zusätzlich kann die mindestens eine Korrekturlinse auch eine Zylinderlinse umfassen, die entlang der Rotationsachse eine gerade Kontur hat und in einer Richtung senkrecht hierzu eine konvexe Form für eine licht-sammelnde Wirkung hat. Diese Zylinderlinse hat somit für den Axialanteil des Sendelichts einen Brechwert von null oder nahe null und für den Transversalanteil des Sendelichts einen positiven Brechwert. Durch den positiven Brechwert wird die licht-zerstreuende Wirkung der Wölbung der Gehäusewand für den Transversalanteil des Sendelichts kompensiert, so dass durch die Zylinderlinse und die Wölbung der Gehäusewand zusammen betrachtet keine Änderung der Fokuslage oder der Divergenz oder Konvergenz des Sendelichts im Überwachungsbereich eintritt.

Um die Zahl notwendiger Komponenten gering zu halten, können die Korrekturlinse und eine an der Lichtquelle vorhandene Fokussierlinse durch ein und dieselbe Linse gebildet sein. Dabei hat diese gemeinsame Linse zum Fokussieren sowohl für den Axial- als auch für den Transversalanteil des Sendelichts eine licht-sammelnde Wirkung. Zusätzlich weist die Linse einen Astigmatismus auf, wobei die licht-sammelnde Wirkung für den Transversalanteil des Sendelichts stärker ist als für den Axialanteil. Es können auch weitere Fokussierlinsen, insbesondere ohne Astigmatismus, vorhanden sein.

Anstelle einer Korrekturlinse oder zusätzlich können die optischen Korrekturmittel zum Kompensieren des Astigmatismus auch mindestens einen Korrekturspiegel aufweisen. Dieser kann mit der Dreheinrichtung verbunden und gemeinsam mit der Strahlrichtung des Sendelichts drehbar sein. Bevorzugt hat der Korrekturspiegel eine gekrümmte Oberfläche, die für einen Transversalanteil des Sendelichts eine größere Brechkraft hat als für einen Axialanteil des Sendelichts. Diese Ausführung ist besonders bevorzugt, wenn der Korrekturspiegel gleichzeitig als sich drehender Umlenkspiegel genutzt wird, mit dem das Sendelicht von einer ortsfesten Lichtquelle abgelenkt wird.

Die licht-zerstreuende Wirkung der Gehäusewand für Transversalanteile des Sendelichts beruht darauf, dass die Innenseite der Gehäusewand bei herkömmlichen Sensoren einen kleineren Krümmungsradius hat als die Außenseite der Gehäusewand. Bei einer Variante des erfindungsgemäßen Sensors wird diese licht-zerstreuende Wirkung vermieden, indem die Außenseite der Gehäusewand segmentiert ist und jedes Segment einen Krümmungsradius hat, der gleich dem Krümmungsradius der Innenseite der Gehäusewand ist. Alternativ kann in analoger Weise auch die Innenseite segmentiert sein, wobei jedes Segment den gleichen Krümmungsradius wie die Außenseite hat.

Bei den beschriebenen Varianten des erfindungsgemäßen Sensors können die mit den optischen Korrekturmitteln jeweils gewünschten licht-zerstreuenden und/oder licht-sammelnden Wirkungen auch dadurch realisiert werden, dass Materialien mit einem Brechungsindex eingesetzt werden, der sich entlang der Strahlrichtung des Sendelichts verändert. In diesem Fall kann auf gekrümmte Oberflächen der optischen Korrekturmittel verzichtet werden.

Der erfindungsgemäße optische Sensor kann grundsätzlich für beliebige Anwendungen eingesetzt werden, bei denen ein Lichtfleck in einen Überwachungsbereich gestrahlt wird. Beispielsweise kann er als Lichttaster, als Lichtschranke, als Reflexionslichtschranke oder als Abstandsmesser, insbesondere basierend auf einer Phasenmessung eines Sendelichtpulses oder basierend auf dem Triangulationsprinzip, ausgeführt sein. Je nach Ausgestaltung kann der Detektor innerhalb des Gehäuses oder auch an einem der Lichtquelle gegenüberliegenden Ende des Überwachungsbereichs angeordnet sein. Bevorzugt ist der optische Sensor als Abstandsmesser nach dem Lichtlaufzeitprinzip aufgeführt. Hierbei sind elektronische Steuerungs- und Auswertemittel vorhanden, die dazu eingerichtet sind, die Lichtquelle zum Aussenden von Sendelichtpulsen anzusteuern und auf Grundlage einer Lichtlaufzeit, die mit von dem Detektor nachgewiesenen Lichtpulsen bestimmt wird, einen Objektabstand zu ermitteln.

Das Sendelicht kann grundsätzlich durchgängig oder als Sendelichtpuls ausgesandt werden. In beiden Fällen kann durch Drehung der Strahlrichtung, entweder während Abstrahlung eines Sendelichtstrahls oder zwischen aufeinander folgenden Sendelichtpulsen, der Überwachungsbereich in einer Richtung quer zur Rotationsachse abgerastert werden.

Für eine zwei-dimensionale Rasterung kann vorgesehen sein, dass die Neigung der Strahlrichtung zur Rotationsachse hin verstellbar ist. Hierdurch kann der Überwachungsbereich in verschiedenen Höhen abgetastet werden. Damit auch für verschiedene Neigungen der Strahlrichtung ein Astigmatismus vermieden oder kompensiert wird, kann vorgesehen sein, dass eine Korrekturlinse zusammen mit der Strahlrichtung geneigt wird. Alternativ oder zusätzlich kann bei den Varianten, bei denen die optischen Korrekturmittel eine bestimmte Formung der Gehäusewand vorsehen, die jeweils beschriebene Formung an mehreren Höhenbereichen entlang der Rotationsachse vorhanden sein.

Das Sendelicht kann prinzipiell einen beliebigen Wellenlängenbereich aufweisen. Beispielsweise kann es sich um Ultraviolettlicht, sichtbares Licht oder Infrarotlicht handeln. Es können auch mehrere Lichtquellen vorhanden sein, die Sendelicht verschiedener Wellenlängenbereiche, insbesondere sequenziell, aussenden. In diesem Fall werden die Strahlengänge der verschiedenen Lichtquellen auf einen gemeinsamen Pfad vereint, so dass die beschriebene Strahlrichtung des Sendelichts für alle Lichtquellen die gleiche ist. Bei den Lichtquellen kann es sich beispielsweise um LEDs oder Laserdioden handeln.

Das Gehäuse kann die Lichtquelle zumindest in einer Richtung um die Rotationsachse herum umschließen. Vorzugsweise umschließt das Gehäuse die Lichtquelle auf allen Seiten. Prinzipiell kann der Detektor auch außerhalb des Gehäuses angeordnet sein, bevorzugt befindet er sich aber innerhalb des Gehäuses und wird zusammen mit der Lichtquelle um die Rotationsachse gedreht.

Die Gehäusewand kann außerhalb der Durchtrittsbereiche, durch die das Sendelicht durchtritt, beliebig geformt sein. Die Beschreibungen der Form der Gehäusewand, insbesondere der Wölbung der Gehäusewand und eine Formung der Gehäusewand als optische Korrekturmittel, können deshalb beschränkt auf den Durchtrittsbereich der Gehäusewand verstanden werden.

Prinzipiell kann ein Astigmatismus zwar auch durch ebene Durchtrittsbereiche der Gehäusewand, die keine Wölbung aufweisen, vermieden werden. Weil aber die Strahlrichtung des Sendelichts gedreht werden soll, insbesondere um 360°, muss aber eine Gehäusewand mit ebenen Durchtrittsbereichen auch Wölbungen oder Kanten haben. Bei den erfindungsgemäßen Ausführungen hat die Gehäusewand in einem Transversalschnitt zumindest stellenweise eine Wölbung, die ein Durchtrittsbereich für Sendelicht ist. Dabei kann die Wölbung die Form eines Kreisringsegments haben, beispielsweise eines Viertel- oder Halbrings, wobei die übrigen Abschnitte auch durch ebene Flächen gebildet sein können. Bevorzugt hat die Gehäusewand aber in Durchtrittsbereichen für Sendelicht die Form eines geschlossenen Rings.

Bei dem nachzuweisenden Licht ist grundsätzlich ein Astigmatismus weniger bedeutsam, da beispielsweise der Detektor oder ein Spiegel, der das nachzuweisende Licht auf den Detektor leitet, genügend groß gewählt werden können, dass sich ein Astigmatismus bei nachzuweisendem Licht nicht oder nur kaum nachteilig auswirkt. Es kann grundsätzlich aber auch vorgesehen sein, dass diejenigen Bereiche der Gehäusewand, durch die das nachzuweisende Licht durchtritt, ebenfalls eine Formung aufweisen, durch die ein Astigmatismus verringert oder vermieden wird. Ebenso können für das nachzuweisende Licht auch astigmatische Korrekturlinsen oder -spiegel vorhanden sein.

Weitere Merkmale und Vorteile der Erfindung werden nachstehend mit Bezug auf die beigefügten schematischen Figuren beschrieben. Hierin zeigen:
- Fig. 1: eine schematische Darstellung eines Ausführungsbeispiels eines erfindungsgemäßen optischen Sensors in einem Transversalschnitt;
- Fig. 2: eine schematische Darstellung der Ausführungsform des erfindungsgemäßen optischen Sensors in einem Axialschnitt;
- Fig. 3: eine schematische Darstellung eines Ausschnitts des Gehäuses des erfindungsgemäßen optischen Sensors in einem Axialschnitt;
- Fig. 4: eine schematische Perspektivdarstellung eines Gehäuses eines erfindungsgemäßen optischen Sensors;
- Fig. 5: eine schematische Darstellung von Komponenten eines zweiten Ausführungsbeispiels eines erfindungsgemäßen Sensors und
- Fig. 6: eine schematische Darstellung eines weiteren Ausführungsbeispiels eines erfindungsgemäßen optischen Sensors in einem Transversalschnitt.

Gleiche und gleichwirkende Bestandteile sind in den Figuren in der Regel mit denselben Bezugszeichen gekennzeichnet.

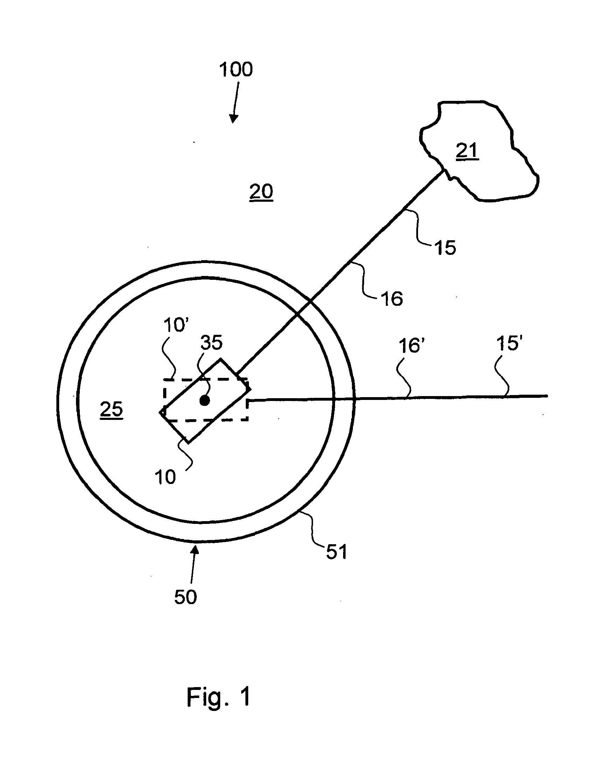

Fig. 1 zeigt ein erstes Ausführungsbeispiel eines erfindungsgemäßen optischen Sensors 100 in einem Transversalschnitt, das heißt senkrecht zu einer Rotationsachse 35. In Fig. 1 sind ein Gehäuse 50 des Sensors 100 sowie eine im Gehäuse 50 angeordnete Lichtquelle 10 dargestellt.

Mit dem Sensor 100 soll ein Überwachungsbereich 20 beobachtet werden. Abhängig von der Ausgestaltung des Sensors 100 kann insbesondere der Abstand zu einem Objekt im Überwachungsbereich 20 bestimmt werden, beispielsweise auf Grundlage der Lichtlaufzeit.

Durch das Gehäuse 50 wird ein Sensorinnenraum 25 von dem Überwachungsbereich 20 getrennt. Mit der Lichtquelle 10 kann Sendelicht 15 ausgestrahlt werden, welches eine Gehäusewand 51 des Gehäuses 50 an einem ringförmigen Durchtrittsbereich durchtritt und sich in Strahlrichtung 16 im Überwachungsbereich 20 ausbreitet.

In dem abgebildeten Beispiel trifft das Sendelicht 15 auf ein Objekt 21 im Überwachungsbereich 20. Von dem Objekt 21 wird ein Teil des Sendelichts 15 in Richtung des Sensors 100 zurückgeworfen.

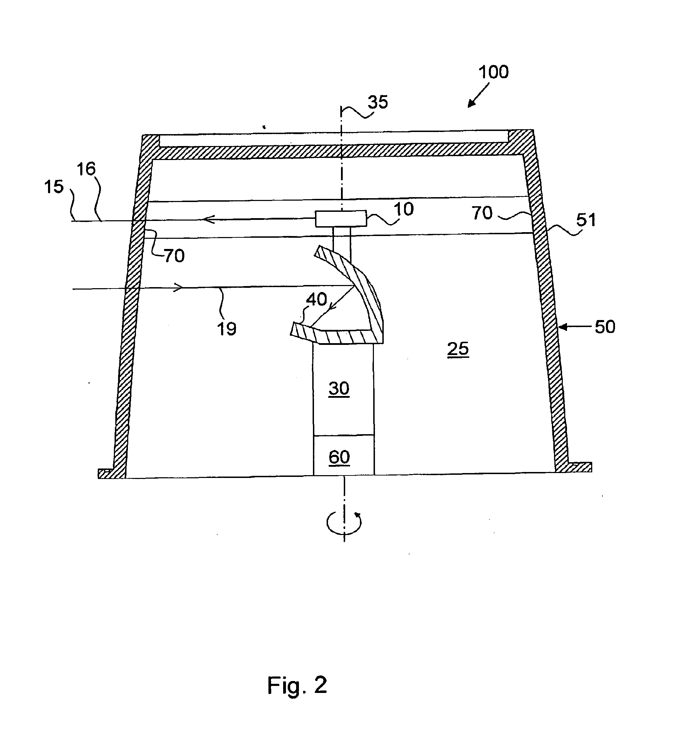

Die Messung von nachzuweisendem Licht wird mit Bezug auf Fig. 2 beschrieben. Diese zeigt schematisch den Sensor 100 in einem axialen Schnitt, der die Rotationsachse 35 enthält. Dargestellt ist nachzuweisendes Licht 19, das von dem hier nicht abgebildeten Objekt zurückgeworfen wird. Das nachzuweisende Licht 19 verläuft durch die Gehäusewand 51 in den Sensorinnenraum 25. Dort wird es über Ablenkmittel, beispielsweise Spiegel, auf einen Detektor 40 geleitet.

Mit elektronischen Steuerungs- und Auswertemitteln 60 kann die Lichtquelle 10 zum Aussenden von Sendelicht 15 angesteuert werden und die mit dem Detektor 40 gemessenen Signale können ausgewertet werden. Insbesondere können die elektronischen Steuerungs- und Auswertemittel 60 so eine Lichtlaufzeit des Sendelichts 15 zum Objekt und zurück zum Sensor ermitteln und damit auf den Objektabstand schließen. Dabei kann das Sendelicht 15 insbesondere als Lichtpuls abgestrahlt werden.

Um verschiedene Teile des Überwachungsbereichs 20 zu kontrollieren, wird Sendelicht 15 sequentiell in verschiedene Richtungen abgestrahlt, indem die Strahlrichtung 16 des Sendelichts 15 mit einer Dreheinrichtung 30 um die Rotationsachse 35 gedreht wird. Im dargestellten Beispiel dreht die Dreheinrichtung 30 die Lichtquelle 10 sowie die Ablenkmittel zum Detektor und den Detektor 40. Alternativ kann aber auch vorgesehen sein, dass die Lichtquelle 10 ortsfest ist und von dieser abgestrahltes Sendelicht 15 auf einen Umlenkspiegel trifft, der um die Rotationsachse 35 gedreht wird. Das Gehäuse 50 wird hingegen nicht mitgedreht, so dass Sendelicht sequentiell auf verschiedene Bereiche der Gehäusewand entlang einer Ringform gestrahlt wird.

In Fig. 1 ist ein erster Sendelichtpuls 15 erkennbar, der bei einer ersten Drehposition der Lichtquelle 10 in eine erste Strahlrichtung 16 gesendet wird. Gleichzeitig oder anschließend wird die Lichtquelle 10 um die Rotationsachse 35 gedreht. Gestrichelt dargestellt ist eine zweite Drehposition der Lichtquelle 10', von welcher die Lichtquelle 10' einen Sendelichtpuls 15' in eine andere Strahlrichtung 16' aussendet.

Damit auch kleine Objekte 21 sicher erkannt und gegebenenfalls ihr Abstand ermittelt werden kann, soll eine Querschnittsfläche des Sendelichts 15 möglichst gering sein. Beispielsweise sollen Objekte 21 auch bei einer Größe von wenigen Zentimetern noch bei einem Abstand von 10 m zuverlässig nachgewiesen werden.

Damit der Strahlquerschnitt des Sendelichts 15 über große Entfernungen möglichst gering ist, wird das Sendelicht 15 bevorzugt als paralleles Strahlenbündel ausgesendet, das heißt, sein Fokus liegt im Unendlichen. Zweckmäßigerweise sollte der Strahlquerschnitt kreisförmig sein und einen Durchmesser von maximal 1 cm oder 2 cm haben.

In einer Transversalebene, das heißt in einem Schnitt senkrecht zur Rotationsachse 35, hat die Gehäusewand 51 in den Durchtrittsbereichen, durch die Sendelicht 15, 15' durchtritt, eine Wölbung. Bei dem in Fig. 1 dargestellten Beispiel ist diese gewölbte Form ein Kreisring. Dabei hat eine Innenseite der Gehäusewand 51 einen kleineren Krümmungsradius als eine Außenseite der Gehäusewand 51. Hierdurch bewirkt die Gehäusewand 51 eine licht-zerstreuende Wirkung in der Transversalebene.

Wegen der Querschnittsausdehnung des Sendelichtstrahls 15 hat dieser einen Transversalanteil und einen Axialanteil.

Durch die Wölbung der Gehäusewand 51 um die Rotationsachse 35 wird der Transversalanteil des Sendelichts 15 aufgeweitet. Der Strahlquerschnitt des Sendelichts 15 wird also in der Transversalebene erhöht. Der Axialanteil wird hingegen durch diese Wölbung nicht oder nur kaum verändert. Die Wölbung für sich betrachtet führt also zu einer stärkeren Aufweitung in der Transversalebene als in der Axialebene.

Bei herkömmlichen Sensoren führt dies zu einem Astigmatismus, bei dem der Axialanteil und der Transversalanteil unterschiedliche Fokuslagen oder Brennweiten haben. Hierdurch ist der Querschnitt des Sendelichts 15 im Überwachungsbereich 20 nicht mehr kreisförmig sondern vergrößert und abhängig von seiner Entfernung im Überwachungsbereich 20 linienförmig oder elliptisch.

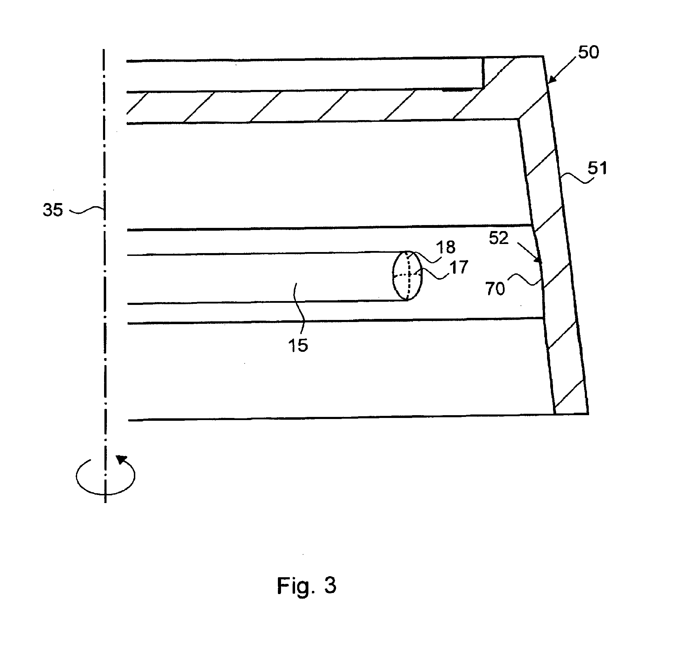

Mit dem erfindungsgemäßen Sensor 100 wird ein durch die Gehäusewand 51 verursachter Astigmatismus verringert oder vollständig vermieden. Dies wird mit Bezug auf Fig. 3 beschrieben. Diese zeigt schematisch einen Ausschnitt des Gehäuses 50 eines erfindungsgemäßen Sensors in einem axialen Schnitt. Erkennbar sind die Gehäusewand 51 und ein Sendelichtstrahl 15, der aus Richtung der Rotationsachse 35 auf die Gehäusewand 51 zuläuft. Ein gestrichelt dargestellter Transversalanteil 17 des Sendelichts 15 erfährt, wie zuvor beschrieben, durch die Gehäusewand 51 eine zerstreuende Wirkung. Damit die Brennweiten für den Transversalanteil 17 und den ebenfalls gestrichelt dargestellten Axialanteil 18 des Sendelichts 15 möglichst nicht auseinanderfallen, hat die Gehäusewand 51 als optische Korrekturmittel 70 eine Form, die für den Axialanteil 18 ebenfalls eine licht-zerstreuende Wirkung hat. Hierzu weist beim dargestellten Beispiel die Gehäusewand 51 innerhalb eines Durchtrittsbereichs 52 eine gekrümmte Form auf. In dem axialen Schnitt erstreckt sich diese Krümmung entlang der Rotationsachse 35. Durch die Krümmung hat die Gehäusewand 51 in dem Durchtrittsbereich eine reduzierte Wandstärke gegenüber Teilen der Gehäusewand 51 benachbart zum Durchtrittsbereich 52. In Richtung der Rotationsachse 35 kann die Wandstärke an einem zentralen Bereich des Durchtrittsbereichs 52 geringer sein als zum Rand des Durchtrittsbereichs 52 hin.

Die licht-zerstreuende Wirkung des gekrümmten Bereichs für den Axialanteil 18 des Sendelichts 15 ist möglichst gleich stark wie die licht-zerstreuende Wirkung der Wölbung der Gehäusewand 51 für den Transversalanteil 17 des Lichtstrahls 15. Dann haben der Transversalanteil 17 und der Axialanteil 18 des Sendelichts 15 die gleichen Fokuslage und es tritt kein Astigmatismus ein.

Bei der in Fig. 3 dargestellten Ausführungsform ist der gekrümmte Bereich als Vertiefung oder Ausnehmung an der Innenseite der Gehäusewand 51 gebildet. Alternativ oder zusätzlich kann aber auch an der Außenseite der Gehäusewand 51 im Durchtrittsbereich 52 eine Vertiefung oder Ausnehmung vorhanden sein.

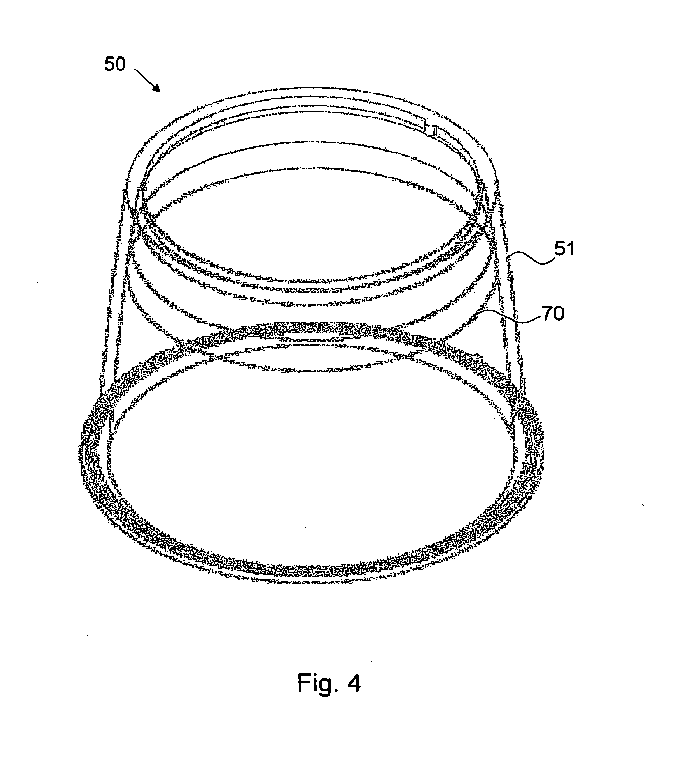

Fig. 4 zeigt schematisch eine perspektivische Darstellung eines Gehäuses 50 eines erfindungsgemäßen optischen Sensors. Das Gehäuse 50 hat die Form einer rotationssymmetrischen Gehäusekappe und kann auch als Frontscheibe bezeichnet werden. Die geöffnete Bodenseite der Gehäusekappe kann an ein weiteres, hier nicht dargestelltes, Gehäuse anschließen. Sendelicht durchtritt das Gehäuse 50 an der Mantelfläche der Gehäusewand 51.

Die optischen Korrekturmittel 70 sind hier, wie mit Bezug auf Fig. 3 beschrieben, an der Gehäusewand 51 gebildet. Es ist erkennbar, dass die optischen Korrekturmittel 70 ringförmig an der Gehäusewand 51 um die Rotationsachse herum verlaufen und gerade an dem Durchtrittsbereich des Sendelichts gebildet sind.

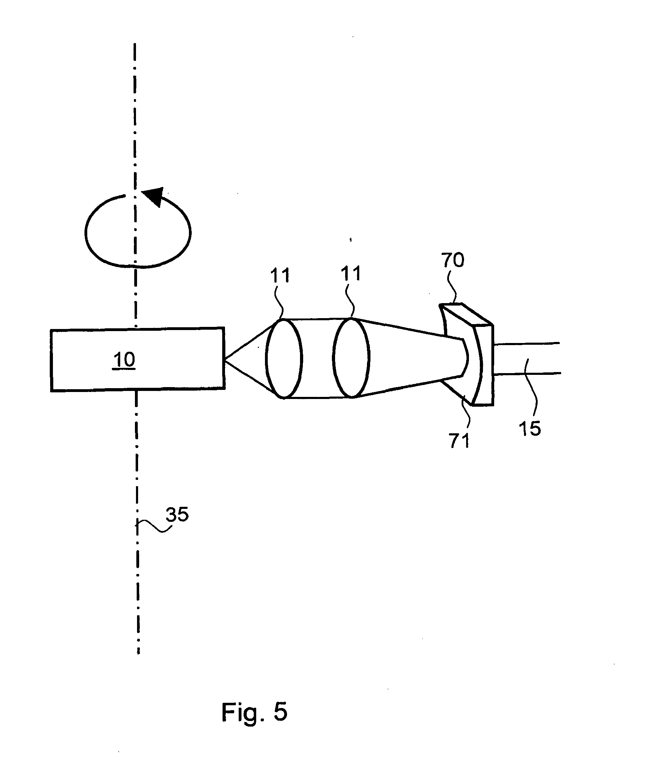

Ein anderes Ausführungsbeispiel wird mit Bezug auf Fig. 5 beschrieben. Dieses zeigt als wesentliche Komponenten eines erfindungsgemäßen Sensors 100 eine Lichtquelle 10 und optische Korrekturmittel 70.

Die optischen Korrekturmittel 70 sind hier als mindestens eine Korrekturlinse 71 ausgeführt, die im Strahlengang zwischen der Lichtquelle 10 und der hier nicht dargestellten Gehäusewand 51 angeordnet ist. Zwischen der Lichtquelle 10 und den optischen Korrekturmitteln 70 können weitere Strahlformungsmittel 11, beispielsweise eine oder mehrere Linsen, zum Fokussieren von Sendelicht 15 vorhanden sein.

Bei dieser Ausführung wird der Lichtsender 10 zusammen mit den Linsen 11 und der Korrekturlinse 71 um die Rotationsachse 35 gedreht. Somit verläuft das Sendelicht 15 stets durch die Korrekturlinse 71, ohne dass eine rotationssymmetrische Korrekturlinse 71 um die Rotationsachse 35 herum notwendig ist.

Die Korrekturlinse 71 bewirkt einen Astigmatismus, indem ihre Brechkraft in der Axialebene kleiner ist als in der Transversalebene. Im dargestellten Beispiel hat die Korrekturlinse 71 für den Axialanteil des Sendelichts 15 eine licht-zerstreuende Wirkung, also eine negative Brechkraft. Für den Transversalanteil, der bei Fig. 5 in die Blattebene hinein verläuft, hat die Korrekturlinse 71 eine Brechkraft von null. Die Korrekturlinse 71 hat somit die Form einer licht-zerstreuenden Zylinderlinse.

Die in Fig. 5 dargestellte Korrekturlinse 71 kann auch zusammen mit den optischen Korrekturmitteln, die mit Bezug auf die Figuren 1 bis 4 beschrieben wurden, eingesetzt werden.

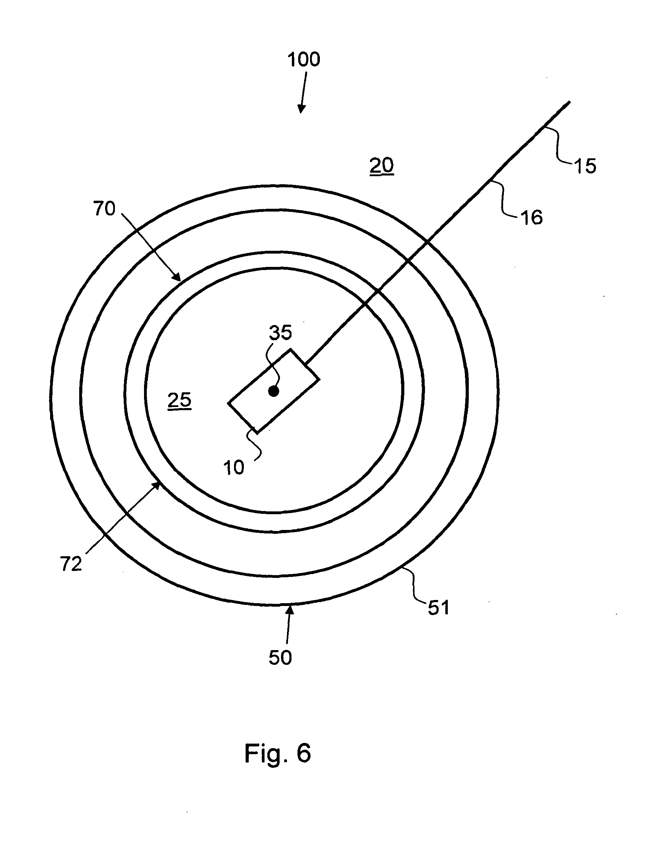

Ein weiteres Ausführungsbeispiel eines erfindungsgemäßen optischen Sensors 100 ist in Fig. 6 in einem Transversalschnitt gezeigt. Wie zu Fig. 1 beschrieben, sendet auch hier eine Lichtquelle 10 Sendelicht 15 aus, das eine Gehäusewand 51 in einem Durchtrittsbereich durchläuft, der für einen Transversalanteil des Sendelichts 15 eine defokussierende Wirkung hat. Als optische Korrekturmittel 70 sind bei der Variante aus Fig. 6 ein lichtdurchlässiger Ring 72 vorhanden. Im dargestellten Fall befindet sich dieser innerhalb des Gehäuses 50 und konzentrisch zu den Durchtrittsbereichen der Gehäusewand 51. Alternativ kann der Ring 72 aber auch außerhalb des Gehäuses 50 angeordnet sein.

Der Ring 72 hat durch seine Krümmung um die optische Achse 35 zwar auch eine licht-zerstreuende Wirkung für den Transversalanteil eines Sendelichtstrahls 15. Der Ring 72 hat aber auch eine Krümmung in Richtung der Rotationsachse 35, deren licht-zerstreuende Wirkung für einen Axialanteil für Sendelicht 15 stärker ist als die licht-zerstreuende Wirkung des Rings 72 für Transversalanteile des Sendelichts 15.

Somit können durch den Ring 72 die Fokuslagen, die für den Axial- und den Transversalanteil aufgrund der Gehäusewand 51 auseinanderfallen, angenähert werden.

Mit dem erfindungsgemäßen optischen Sensor wird erreicht, dass trotz einer Wölbung der Gehäusewand des Sensors ein Astigmatismus für Sendelicht im Überwachungsbereich nicht oder nur in geringer Ausprägung vorkommt. Ein Strahlquerschnitt des Sendelichts wird vorteilhafterweise dadurch nicht oder nur kaum gegenüber dem Fall vergrößert, dass kein Gehäuse und keine optischen Korrekturmittel vorhanden sind. Hierdurch ist es möglich, auch kleine Objekte innerhalb eines großen Entfernungsbereichs sicher zu erkennen.

### Bezugszeichenliste

- 100: optischer Sensor
- 10: Lichtquelle
- 10': Lichtquelle an einer zweiten Drehposition
- 11: optische Fokussiermittel
- 15: Sendelicht
- 15': Sendelicht, das bei einer zweiten Drehposition ausgesendet wird
- 16: Strahlrichtung
- 16': Strahlrichtung für eine Lichtaussendung bei einer zweiten Drehposition
- 17: Transversalanteil des Sendelichts
- 18: Axialanteil des Sendelichts
- 19: nachzuweisendes Licht
- 20: Überwachungsbereich
- 21: Objekt
- 25: Sensorinnenraum
- 30: Dreheinrichtung
- 35: Rotationsachse
- 40: Detektor
- 50: Gehäuse
- 51: Gehäusewand
- 52: Durchtrittsbereich der Gehäusewand, an dem das Sendelicht durchtritt
- 60: elektronische Steuerungs- und Auswertemittel
- 70: optische Korrekturmittel
- 71: Korrekturlinse
- 72: Ring als optisches Korrekturmittel

## Patentansprüche

1. Optischer Sensor
mit einer Lichtquelle (10) zum Aussenden von Sendelicht (15) in einen Überwachungsbereich (20),
mit einer Dreheinrichtung (30) zum Drehen einer Strahlrichtung (16) des Sendelichts (15) um eine quer zur Strahlrichtung (16) orientierte Rotationsachse (35),
mit einem Detektor (40) zum Messen von nachzuweisendem Licht (19), das von einem Objekt (21) im Überwachungsbereich (20) zurückgestrahlt wird, mit einem Gehäuse (50) zum Trennen eines Sensorinnenraums (25) von dem Überwachungsbereich (20),
wobei das Gehäuse (50) eine Gehäusewand (51) aufweist, die für das Sendelicht (15) und das nachzuweisende Licht (19) durchlässig ist und durch welche das Licht (15, 19) im Messbetrieb hindurchtritt,
**dass** in einem Strahlengang des Sendelichts (15) optische Korrekturmittel (70) vorhanden sind, die zum Kompensieren oder Vermeiden eines durch eine Wölbung der Gehäusewand (51) bedingten Astigmatismus gestaltet sind,
**dadurch gekennzeichnet,**
**dass** die optischen Korrekturmittel (70) durch einen gekrümmten Bereich der
Gehäusewand (51) und ringförmig in einer Transversalebene entlang der Gehäusewand (51) gebildet sind und
**dass** der gekrümmte Bereich eine reduzierte Wandstärke aufweist.

2. Sensor nach Anspruch 1,
**dadurch gekennzeichnet,**
**dass** die Gehäusewand (51) in Bereichen, in denen das Sendelicht (15) hindurchtritt, rotationssymmetrisch bezüglich der Rotationsachse (35) geformt ist und
**dass** die optischen Korrekturmittel (70) ebenfalls in Bereichen, in denen durch sie das Sendelicht (15) durchtritt, rotationssymmetrisch bezüglich der Rotationsachse (35) geformt sind.

3. Sensor nach einem Anspruch 1 oder 2,
**dadurch gekennzeichnet,**
**dass** die Wölbung der Gehäusewand (51) für Transversalanteile (17) des Sendelichtstrahls (15) die Wirkung einer Zerstreuungslinse hat,
**dass** für Axialanteile (18) des Sendelichtstrahls (15) die optischen Korrekturmittel (70) die Wirkung einer Zerstreuungslinse haben und
**dass** die Wirkung einer Zerstreuungslinse durch die Wölbung der Gehäusewand (51) und die Wirkung einer Zerstreuungslinse durch die optischen Korrekturmittel (70) zu einem Annähern der Fokuslagen für den Transversalanteile (17) und den Axialanteil (18) des Sendelichts (15) führen.

4. Sensor nach einem der Ansprüche 1 bis 3,
**dadurch gekennzeichnet,**
**dass** zum Bereitstellen einer Wirkung einer Zerstreuungslinse für Axialanteile (18) des Sendelichts (15) die optischen Korrekturmittel (70) als gekrümmter Bereich der Gehäusewand (51) gebildet sind,
**dass** der gekrümmte Bereich in einem axialen Schnitt eine konkave Form aufweist.

5. Sensor nach Anspruch 4,
**dadurch gekennzeichnet,**
**dass** durch den gekrümmten Bereich der Gehäusewand (51) eine konkave Form der Innen- und/oder Außenseite der Gehäusewand (51) gebildet ist.

6. Sensor nach einem der Ansprüche 1 bis 5,
**dadurch gekennzeichnet,**
**dass** die optischen Korrekturmittel (70) einen lichtdurchlässigen Ring (72) aufweisen, der konzentrisch zum Gehäuse (50) angeordnet ist,
**dass** der Ring (72) zum Bereitstellen der Wirkung einer Zerstreuungslinse einen konkaven Oberflächenbereich hat,
**dass** der konkave Oberflächenbereich so gewählt ist, dass der Astigmatismus der Gehäusewand (51) kompensiert wird.

7. Sensor nach einem der Ansprüche 1 bis 6,
**dadurch gekennzeichnet,**
**dass** die optischen Korrekturmittel (70) zum Kompensieren des Astigmatismus mindestens eine Korrekturlinse (71) umfassen, die mit der Dreheinrichtung (30) verbunden ist und gemeinsam mit der Strahlrichtung (16) des Sendelichts (15) drehbar ist.

8. Sensor nach Anspruch 7,
**dadurch gekennzeichnet,**
**dass** die mindestens eine Korrekturlinse (71) eine astigmatische Linse (71) ist, die für Axialanteile (18) des Sendelichts (15), die in einem axialen Schnitt, welcher die Senderichtung (16) enthält, auf die Korrekturlinse (71) treffen, einen kleineren Brechwert hat als für Transversalanteile (17) des Sendelichts (15), die in einer Transversalebene auf die Korrekturlinse (71) treffen.

9. Sensor nach Anspruch 7 oder 8,
**dadurch gekennzeichnet,**
**dass** die mindestens eine Korrekturlinse (71) eine Zylinderlinse (71) aufweist, die entlang der Rotationsachse (35) eine konkave Form für eine licht-zerstreuende Wirkung hat und in einer Richtung senkrecht hierzu eine gerade Kontur hat.

10. Sensor nach einem der Ansprüche 7 bis 9,
**dadurch gekennzeichnet,**
**dass** die mindestens eine Korrekturlinse (71) eine Zylinderlinse (71) aufweist, die entlang der Rotationsachse (35) eine gerade Kontur hat und in einer Richtung senkrecht hierzu eine konvexe Form für eine licht-sammelnde Wirkung hat.

11. Sensor nach einem der Ansprüche 1 bis 10,
**dadurch gekennzeichnet,**
**dass** die optischen Korrekturmittel (70) zum Kompensieren des Astigmatismus mindestens einen Korrekturspiegel aufweisen,
**dass** der Korrekturspiegel mit der Dreheinrichtung (30) verbunden ist und gemeinsam mit der Strahlrichtung (16) des Sendelichts (15) drehbar ist und dass der Korrekturspiegel eine gekrümmte Oberfläche hat, die für einen Transversalanteil des Sendelichts (15) eine größere Brechkraft hat als für einen Axialanteil des Sendelichts (15).

12. Sensor nach einem der Ansprüche 1 bis 11,
**dadurch gekennzeichnet,**
**dass** elektronische Steuerungs- und Auswertemittel (60) vorhanden sind, die dazu eingerichtet sind, die Lichtquelle (10) zum Aussenden von Sendelichtpulsen (15) anzusteuern und auf Grundlage einer Lichtlaufzeit, die mit von dem Detektor (40) nachgewiesenen Lichtpulsen (19) bestimmt wird, einen Objektabstand zu ermitteln.

## Claims

1. Optical sensor, having
a light source (10) to emit transmitted light (15) into a monitoring area (20),
a rotator (30) to rotate a beam direction (16) of the transmitted light (15) about a rotation axis (35) orientated transversely to the beam direction (16),
a detector (40) to measure light (19) to be detected, which is reflected back from an object (21) in the monitoring area (20),
a housing (50) to separate a sensor inner space (25) from the monitoring area (20),
wherein the housing (50) has a housing wall (51) which is permeable to the transmitted light (15) and to the light to be detected (19), and through which housing wall (51) the light (15, 19) passes during the measuring operation, wherein optical correction means (70) are present in an optical path of the transmitted light (15), said optical correction means (70) being designed to compensate or avoid astigmatism induced by a bulging of the housing wall (51),
**characterised in that**
the optical correction means (70) are formed by a curved area of the housing wall (51) and annularly in a transversal plane along the housing wall (51), and
the curved area has a reduced wall thickness.

2. Sensor according to claim 1,
**characterised in that**
the housing wall (51) is formed rotationally symmetrically with respect to the rotation axis (35) in areas in which the transmitted light (15) passes through,
and
the optical correction means (70) are likewise formed rotationally symmetrically with respect to the rotation axis (35) in areas in which the transmitted light (15) passes through them.

3. Sensor according to one of the claims 1 or 2,
**characterised in that**
the bulging of the housing wall (51) has the effect of a diverging lens for transversal portions (17) of the transmitted light beam (15),
the optical correction means (70) have the effect of a diverging lens for axial portions (18) of the transmitted light beam (15), and
the effect of a diverging lens through the bulging of the housing wall (51) and the effect of a diverging lens through the optical correction means (70) lead to an approximation of the focal positions for the transversal portion (17) and the axial portion (18) of the transmitted light (15).

4. Sensor according to one of the claims 1 to 3,
**characterised in that**
the optical correction means (70) are formed as a curved area of the housing wall (51) to provide an effect of a diverging lens for axial portions (18) of the transmitted light (15),
the curved area has a concave shape in an axial section.

5. Sensor according to claim 4,
**characterised in that**
a concave shape of the inner and / or outer side of the housing wall (51) is formed by the curved area of the housing wall (51).

6. Sensor according to one of the claims 1 to 5,
**characterised in that**
the optical correction means (70) have a light-permeable ring (72) which is arranged concentrically with respect to the housing (50),
the ring (72) has a concave surface area to provide the effect of a diverging lens,
the concave surface area is selected so that the astigmatism of the housing wall (51) is compensated.

7. Sensor according to one of the claims 1 to 6,
**characterised in that**
in order to compensate the astigmatism the optical correction means (70) comprise at least one correction lens (71) which is connected to the rotator (30) and can be rotated together with the beam direction (16) of the transmitted light (15).

8. Sensor according to claim 7,
**characterised in that**
the at least one correction lens (71) is an astigmatic lens (71) which has a lower refractive index for axial portions (18) of the transmitted light (15) which impinge on the correction lens (71) in an axial section containing the sending direction (16) than for transversal portions (17) of the transmitted light (15) which impinge on the correction lens (71) in a transversal plane.

9. Sensor according to claim 7 or 8,
**characterised in that**
the at least one correction lens (71) has a cylindrical lens (71) which has a concave shape along the rotation axis (35) for a light-scattering effect and has a straight contour in a direction perpendicular thereto.

10. Sensor according to one of the claims 7 to 9,
**characterised in that**
the at least one correction lens (71) has a cylindrical lens (71) which has a straight contour along the rotation axis (35) and has a convex shape in a direction perpendicular thereto for a light-collecting effect.

11. Sensor according to one of the claims 1 to 10,
**characterised in that**
the optical correction means (70) have at least one correcting mirror to compensate the astigmatism,
the correcting mirror is connected to the rotator (30) and can be rotated together with the beam direction (16) of the transmitted light (15), and
the correcting mirror has a curved surface which has a higher refractive power for a transversal portion of the transmitted light (15) than for an axial portion of the transmitted light (15).

12. Sensor according to one of the claims 1 to 11,
**characterised in that**
electronic control and evaluating means (60) are present which are adapted to trigger the light source (10) to emit transmitted light pulses (15) and to ascertain an object distance based on a light run-time which is determined with light pulses (19) detected by the detector (40).

## Revendications

1. Capteur optique,
avec une source de lumière (10) pour émettre une lumière d'émission (15) dans une zone de surveillance (20),
avec un dispositif de rotation (30) pour faire tourner une direction de faisceau (16) de la lumière d'émission (15) autour d'un axe de rotation (35) orienté transversalement par rapport à la direction de faisceau (16),
avec un détecteur (40) pour la mesure de la lumière à détecter (19), qui est réfléchie par un objet (21) dans la zone de surveillance (20),
avec un boîtier (50) pour séparer un espace interne (25) du capteur par rapport à la zone de surveillance (20),
le boîtier (50) comprenant une paroi de boîtier (51) qui laisse passer la lumière d'émission (15) et la lumière à détecter (19) et à travers laquelle la lumière (15, 19) passe lors de la réalisation des mesures,
des moyens de correction optiques (70) étant présents dans un trajet de rayonnement de la lumière d'émission (15) et agencés pour compenser ou éviter un astigmatisme lié à une courbure de la paroi de boîtier (51),
**caractérisé :**
**en ce que** les moyens de correction optiques (70) sont formés par une zone courbée de la paroi de boîtier (51) et sont annulaires dans un plan transversal le long de la paroi de boîtier (51), et
**en ce que** la zone courbée comprend une épaisseur de paroi réduite.

2. Capteur selon la revendication 1,
**caractérisé :**
**en ce que** la paroi de boîtier (51) est formée en étant à symétrie de révolution par rapport à l'axe de rotation (35) dans des zones à travers lesquelles la lumière d'émission (15) passe, et
**en ce que** les moyens de correction optiques (70) sont également formés en étant à symétrie de révolution par rapport à l'axe de rotation (35) dans des zones à travers lesquelles la lumière d'émission (15) passe.

3. Capteur selon la revendication 1 ou 2,
**caractérisé :**
**en ce que**, pour des parties transversales (17) du rayonnement de la lumière d'émission (15), la courbure de la paroi de boîtier (51) a l'effet d'une lentille divergente,
**en ce que**, pour des parties axiales (18) du rayonnement de la lumière d'émission (15), les moyens de correction optiques (70) ont l'effet d'une lentille divergente, et
**en ce que** l'effet d'une lentille divergente par l'intermédiaire de la courbure de la paroi de boîtier (51) et l'effet d'une lentille divergente par l'intermédiaire des moyens de correction optiques (70) conduisent à un rapprochement des positions focales pour les parties transversales (17) et les parties axiales (18) de la lumière d'émission (15).

4. Capteur selon une des revendications 1 à 3,
**caractérisé :**
**en ce que**, pour produire l'effet d'une lentille divergente pour des parties axiales (18) de la lumière d'émission (15), les moyens de correction optiques (70) sont formés en tant que zone courbée de la paroi de boîtier (51), en ce que la zone courbée, dans une coupe axiale, comprend une forme concave.

5. Capteur selon la revendication 4,
**caractérisé :**
**en ce qu'**une forme concave du côté interne et/ou du côté externe de la paroi de boîtier (51) est constituée par l'intermédiaire de la zone courbée de la paroi de boîtier (51).

6. Capteur selon une des revendications 1 à 5,
**caractérisé :**
**en ce que** les moyens de correction optiques (70) comprennent un anneau (72) laissant passer la lumière, qui est disposé de manière concentrique par rapport au boîtier (50),
**en ce que**, pour la production de l'effet d'une lentille divergente, l'anneau (72) a une zone de surface concave,
**en ce que** la zone de surface concave est choisie d'une manière telle que l'astigmatisme de la paroi de boîtier (51) est compensé.

7. Capteur selon une des revendications 1 à 6,
**caractérisé :**
**en ce que**, pour la compensation de l'astigmatisme, les moyens de correction optiques (70) incluent au moins une lentille de correction (71), qui est reliée au dispositif de rotation (30) et qui peut tourner en même temps que la direction de faisceau (16) de la lumière d'émission (15).

8. Capteur selon la revendication 7,
**caractérisé :**
**en ce que** la au moins une lentille de correction (71) est une lentille d'astigmatisme (71) qui, pour des parties axiales (18) de la lumière d'émission (15) qui, dans une coupe axiale contenant la direction d'émission (16), atteignent la lentille de correction (71), présente un indice de réfraction plus faible que pour des parties transversales (17) de la lumière d'émission (15) qui atteignent la lentille de correction (71) dans un plan transversal.

9. Capteur selon la revendication 7 ou 8,
**caractérisé :**
**en ce que** la au moins une lentille de correction (71) comprend une lentille cylindrique (71) qui, le long de l'axe de rotation (35), a une forme concave en vue d'un effet de diffusion et qui, dans une direction perpendiculaire à celui-ci,
a un contour droit.

10. Capteur selon une des revendications 7 à 9,
**caractérisé :**
**en ce que** la au moins une lentille de correction (71) comprend une lentille cylindrique (71) qui, le long de l'axe de rotation (35), a un contour droit et qui,
dans une direction perpendiculaire à celui-ci, a une forme convexe en vue d'un effet de convergence.

11. Capteur selon une des revendications 1 à 10,
**caractérisé :**
**en ce que**, pour la compensation de l'astigmatisme, les moyens de correction optiques (70) comprennent au moins un miroir de correction,
**en ce que** le miroir de correction est relié au dispositif de rotation (30) et peut tourner en même temps que la direction de faisceau (16) de la lumière d'émission (15), et
**en ce que** le miroir de correction présente une surface courbée qui, pour une partie transversale de la lumière d'émission (15), présente une puissance de réfraction plus grande que pour une partie axiale de la lumière d'émission (15).

12. Capteur selon une des revendications 1 à 11,
**caractérisé :**
**en ce que** des moyens de commande et d'évaluation électroniques (60) sont présents, qui sont agencés pour commander la source de lumière (10) en vue de l'émission d'impulsions de la lumière d'émission (15) et, sur la base d'un temps de propagation de la lumière qui est déterminé avec des impulsions lumineuses (19) détectées par le détecteur (40), pour identifier la distance d'un objet.
